# EUROPEAN PATENT SPECIFICATION

(11) **EP 1 394 664 B1**
(45) Date of publication and mention of the grant of the patent: **03.01.2007**
(21) Application number: 02019309.0
(22) Date of filing: 28.08.2002
(51) Int. Cl.: G06F 3/00

(54) **Apparatus and method for finger to finger typing**
Vorrichtung und Verfahren für Finger auf Finger tippen
Appareil et méthode de dactylographie doigt à doigt

(43) Date of publication of application: 03.03.2004
(73) Proprietor: Zngf, Frank, Taichung (TW)
(72) Inventor: Zngf, Frank, Taichung (TW)
(74) Representative: Bogsch, Adam Attila

(56) References cited:
- WO-A-89/12858
- JP-A- 2000 330 692

## Description

### BACKGROUND OF THE INVENTION

### 1. Field of the Invention

The present invention relates to an input device for an information processing system, and more particularly to a pair of gloves mounted with key buttons used as a keyboard, which can be used in a method of ten-finger-typing for data input of a computer, a personal digital assistant, or a cellular phone etc.

### 2. Description of Related Art

For input data to an information processing device such as a computer, a cellular phone, a personal digital assistant (PDA) or the like, a keyboard is commonly used. When the user presses a key on the keyboard, a corresponding signal will be sent to the information processing system so as to input the corresponding function item. The keyboards for different devices have different sizes and different configurations, which provide different function capacities and different levels of operability. But, among a variety of full service keyboards, the conventional QWERTY keyboard is still currently the most popular one because of the users' habits and its relative good performances in typing operability and typing speed.

However, the conventional QWERTY keyboard is bulky with a rigid structure and needs a flat base with a large space, e.g. top of a desk, to place on. The user is required to be close to the base to type on, and it is inconvenient to carry. To overcome the above restrictions, data gloves as virtual keyboards and hand-held keyboards provide alternative solutions to mitigate or obviate the aforementioned problems.

Instead of using only pressing keys for input, a glove virtual keyboard senses the gesture of fingers, e.g. finger bendings, to decode input items. A system disclosed in U.S. Pat. No. 6304840 uses a data glove as a virtual keyboard enabling ten-finger-typing. The bend angle at the proximal interphalangeal joint detected by a bending sensor is used to decode a particular row of the keyboard. Each finger controls one or more columns. An abduction/adduction sensor is used to discriminate columns operated by the same finger.

A hand held data entry system is a small apparatus, which is held in user's hands for typing. A system, disclosed in U.S. Pat. No. 6288709 B1, has a housing with an upper surface and a lower surface on which multi-directional keys are used to minimize finger movement.

Japanese Patent JP 2000 330692 A discloses a glove keyboard for an information processing system comprising two glove bodies, each formed with multiple glove fingers. The back face of each of the multiple glove fingers of both glove bodies has a plurality of keys mounted onto it. The keys are provided such that pressing on a key inputs a function item corresponding to said pressed key into the information processing system.

PCT application WO 89/12858 describes a glove having functions and structures that correspond to the motions of the hand and fingers. The glove further includes pressure sensitive and magnetic element sensors arranged on the front and backsides of the glove, which may be used as data input keys.

Either with a glove virtual keyboard or a hand held keyboard, the objective of away-from-desk typing is achieved, but typing is impossible to place the apparatus on a desk top and typing function is serious hindered if another object is held in hand at the same time.

### SUMMARY OF THE INVENTION

The main objective of the invention is to provide a worn-on-hand keyboard, with which an operating method enables finger-to-finger ten-finger-typing away from desk. Moreover, the intended worn-on-hand keyboard, even if placed upon a desk, is not hampered from functioning as a keyboard for typing. Also, the user can hold another object in one hand, such as a PDA or a stylus, while it is still possible to type with this worn-on-hand keyboard. This objective is solved by the glove keyboard as defined in claims 1 or 2.

The worn-on-hand keyboard of this invention is an input apparatus for an information system, which comprises two glove bodies each with five glove fingers, and each of those glove fingers mounted with a plurality of pressing keys. In the corresponding input method, with the keyboard apparel worn on both hands of a user, each of the five fingers of each hand is used for striking on a particular one of the keys mounted on the glove fingers of the other hand. For each hand to type on another hand, a half number of keys are mounted on the palm face of proximal and middle phalanxes of each glove finger of one hand while other keys on the palm back face of the other hand. The keys to be pressed by a particular finger are mounted on the corresponding glove finger of the other hand. For examples, keys 'w', 's' and 'x', which would be pressed by the ring finger of the left hand, are mounted on the glove ring finger of the right hand. In such a key and keyboard arrangement, a user can type with ten fingers away-from-the-desk by using five fingers of each of both hands to press the keys on the other hand.

With such apparatus and cooperating typing method, the user can efficiently and ergonomically input data into an information processing system under restricted conditions.

Other objects, advantages and novel features of the invention will become more apparent from the following detailed description when taken in conjunction with the accompanying drawings.

### BRIEF DESCRIPTION OF THE DRAWINGS

Fig. 1 is a plan view of key arrangement on back face of right glove body of the glove keyboard worn on a user's right hand;
Fig. 2 is a plan view of key arrangement on palm face of left glove body of the glove keyboard on a user's left hand;
Fig. 3 is an operational view of the hand gesture of a typing action, key-in of character 'd', for the finger-to-finger typing method of this invention; and
Fig. 4 is a top plan view of an embodiment of this invention which is placed on a desktop in preparation for typing.

### DETAILED DESCRIPTION OF PREFERRED EMBODIMENT

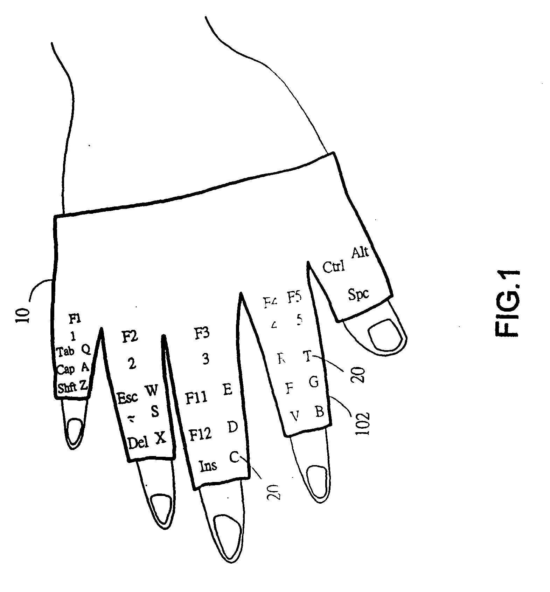

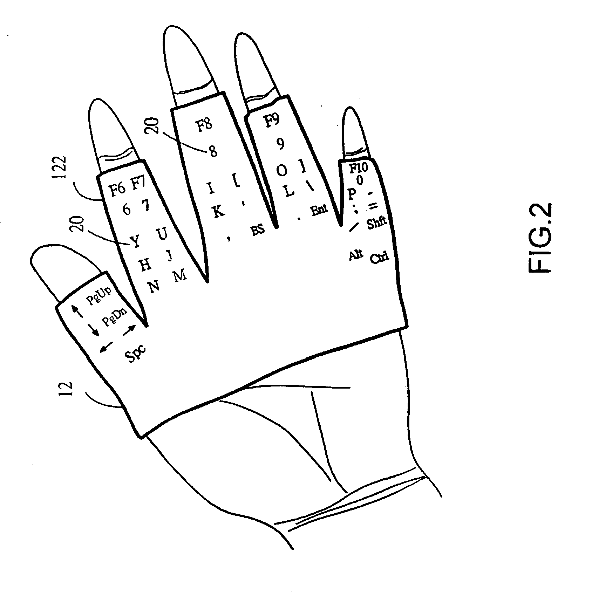

With reference to Figs. 1 and 2, a glove keyboard in accordance with the present invention comprises a right glove body (also referred to as a first glove body) (10) and a left glove body (also referred to as a second glove body) (12). The back face view of a right glove body (10) worn on the right hand of a user is shown in Fig. 1, and the palm face view of a left glove body (12) worn on the left hand is shown in Fig. 2. Five glove fingers (102,122) are included in each respective glove body so as to fit each of the hands of a user. With reference to Figs. 1 and 2, each symbolic mark (20) on the glove bodies represents a key button (20), pressing on a key button inputs a function item, which is either symbolic or functional, into the information processing system. A plurality of key buttons (20) are mounted on the back face of each glove finger of the right glove body (10) while other key buttons (20) on the palm face of each respective glove finger of the left glove body (12).

The arrangement of keys on glove fingers in this embodiment is intended to enable a typing method very similar to the typing on the conventional QWERTY keyboard so that people who are used to the conventional keyboard would have no trouble transferring to using the keyboard of this invention. The keys for inputting items in basic hand positions on a conventional QWERTY keyboard, mostly alphabetic symbols, are mounted on fingers' middle phalanxes of the back face of the right glove body and on proximal phalanxes of the palm face of the left glove body. Those keys to be typed in with lateral movement of fingers on the conventional QWERTY keyboard are mounted on each phalanx to add one more column of keys such that two columns of keys are formed in each of those phalanxes. The numeric keys and functional keys are mounted on the middle phalanx of each finger, excluding the thumb, of the palm face of the left glove body and on proximal phalanxes of the back face of the right glove body. Keys of Ctrl, Alt and Space bar are mounted on the back face of a phalanx of the right glove thumb. Keys for cursor control and screen rolling are arranged on the palm face of the left glove thumb.

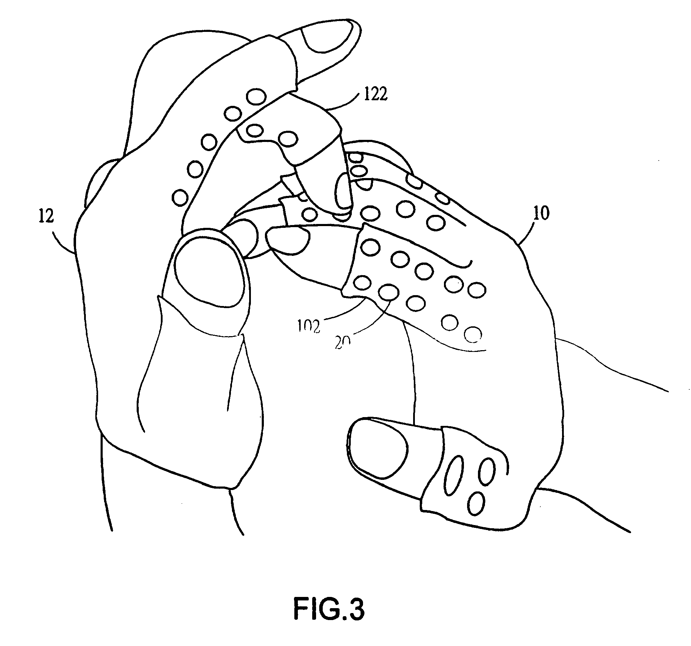

With the above key arrangement, the glove keyboard can be worn on hands for data input enabling finger-to finger ten-finger-typing. The preparation for typing on the glove keyboard with each of the fingertips resting on a corresponding key (20) just can be like that for typing on a conventional keyboard except that the keys are on the hands. For inputting a function item into a computer, either a finger of the right hand is used to press a key, which is mounted on the palm face of a phalanx of a corresponding finger of the left hand, or a finger of the left hand is used to press a key, which is mounted on the back face of a phalanx of the corresponding finger of the right hand. An operational example is shown in Fig. 3, where the middle finger of left hand is pressing the key on the middle row of middle phalanx of the middle finger of the right hand to input a character 'd'. For inputting characters 'e' and 'c', the same finger is used to press the keys, respectively, on the upper row and on the lower row in the same phalanx of 'd'. The actions of input for other items are analogous in corresponding to those on a convention keyboard.

Because that the palm face of the right body is free from mounting any functioning keys, a user may hold an object, e.g. a PDA or a pointer, in the right hand while the keys on the glove body are exposed on the back of fingers. In such circumstances, typing operation with this worn-on keyboard is still ergonomically applicable.

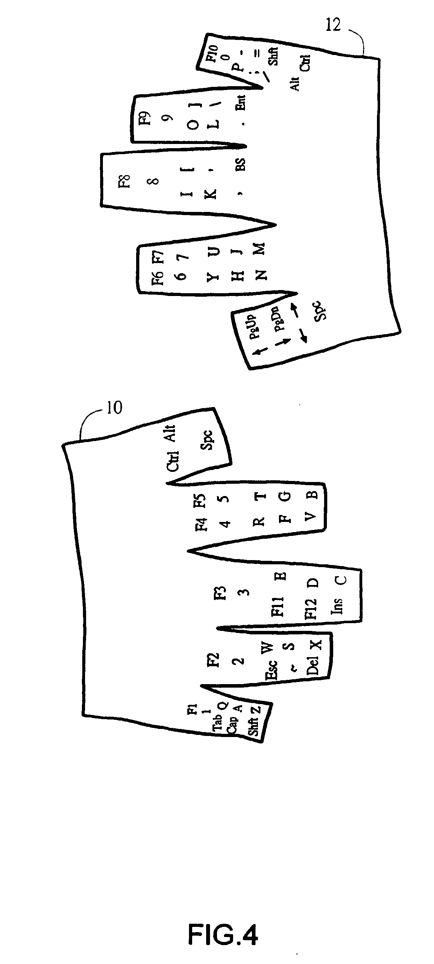

It may not be all the time comfortable or convenient for a user to wear a glove on hands. In such a case, the glove keyboard can be operated off hands. With reference to Fig. 4, the two glove bodies (10, 12) are placed on a flat surface, as the top of a desk, with the right glove body (10) on the left hand side and fingers pointing toward the user, and with the left glove body (12) on the right hand side and fingers pointing away from the user. In such arrangement, this glove keyboard can be seated on a flat place, e.g. top of a desk, for typing.

## Claims

1. A glove keyboard for an information processing system comprising two glove bodies (10, 12), each formed with multiple glove fingers (102, 122), a plurality of keys (20) mounted on the back face of each glove finger (102) of the first glove body (10), another plurality of keys mounted on the palm face of each glove finger (122) of the second glove body (12), the keys provided being such that pressing on a key inputs a function item, corresponding to said pressed key, into the information processing system, **characterized by**
the function keys labeled F1 to F5 being mounted on the back face of proximal phalanxes of the glove fingers (102) of the first glove body (10) and the function keys labeled F6 to F10 being mounted on the palm face of middle phalanxes of the glove fingers (122) of the second glove body (12), respectively, and
the numeric keys being mounted on the back face of proximal phalanxes of the glove fingers (102) of the first glove body (10) and on the palm face of middle phalanxes of the glove fingers (122) of the second glove body (12), respectively.

2. A glove keyboard for an information processing system comprising two glove bodies (10,12), each formed with multiple glove fingers (102, 122), a plurality of keys (20) mounted on the back face of each glove finger (102) of the first glove body (10), another plurality of keys mounted on the palm face of each glove finger (122) of the second glove body (12), the keys provided being such that pressing on a key inputs a function item, corresponding to said pressed key, into the information processing system, **characterized by**
the keys of the alphabetic symbols being mounted on the back face of middle phalanxes of the glove fingers (102) of the first glove body (10), and on the palm face of proximal phalanxes of the glove fingers (122) of the second glove body (12).

## Patentansprüche

1. Handschuh-Tastatur für ein Informationsverarbeitungssystem, aufweisend zwei Handschuh-Körper (10, 12), wobei jeder mit mehreren Handschuhfingern (102, 122) ausgebildet ist, eine Mehrzahl von Tasten (20), die an der Rückenfläche von jedem Handschuhfinger (102) des ersten Handschuhkörpers (10) angebracht ist, eine andere Mehrzahl von Tasten, die an der Handfläche von jedem Handschuhfinger (122) des zweiten Handschuhkörpers (12) angebracht ist, wobei die Tasten derart bereitgestellt sind, dass Drücken auf eine Taste eine Funktionsgröße entsprechend der gedrückten Taste in das Informationsverarbeitungssystem eingibt, **dadurch gekennzeichnet, dass**
die Funktionstasten, die mit F1 bis F5 beschriftet sind, an der Rückenfläche der proximalen Reihen der Handschuhfinger (102) des ersten Handschuhkörpers (10) angebracht sind bzw. die Funktionstasten, die mit F6 bis F10 beschriftet sind, an der Handfläche der mittleren Reihen der Handschuhfinger (122) des zweiten Handschuhkörpers (12) angebracht sind, und
die numerischen Tasten an der Rückenfläche der proximalen Reihen (102) des ersten Handschuhkörpers (10) bzw. an der Handfläche der mittleren Reihen der Handschuhfinger (122) des zweiten Handschuhkörpers (12) angebracht sind.

2. Handschuh-Tastatur für ein Informationsverarbeitungssystem, aufweisend zwei Handschuh-Körper (10, 12), wobei jeder mit mehreren Handschuhfingern (102, 122) ausgebildet ist, eine Mehrzahl von Tasten (20), die an der Rückenfläche von jedem Handschuhfinger (102) des ersten Handschuhkörpers (10) angebracht ist, eine andere Mehrzahl von Tasten, die an der Handfläche von jedem Handschuhfinger (122) des zweiten Handschuhkörpers (12) angebracht ist, wobei die Tasten derart bereitgestellt sind, dass Drücken auf eine Taste eine Funktionsgröße entsprechend der gedrückten Taste in das Informationsverarbeitungssystem eingibt, **dadurch**
**gekennzeichnet, dass**
die Tasten der alphabetischen Symbole an der Rückenfläche der mittleren Reihen der Handschuhfinger (102) des ersten Handschuhkörpers (10) und an der Handfläche der proximalen Reihen der Handschuhfinger (122) des zweiten Handschuhkörpers (12) angebracht sind.

## Revendications

1. Clavier sous forme de gant pour un système de traitement d'informations comprenant deux corps de gant (10, 12), chacun formé avec de multiples doigts de gants (102, 122), une pluralité de touches (20) montées sur la face dos de chaque doigt de gant (102) du premier corps de gant (10), une autre pluralité de touches montées sur la face paume de chaque doigt de gant (122) du second corps de gant (12), les touches prévues étant telles qu'appuyer sur une touche saisit un item de fonction, correspondant à ladite touche appuyée, dans le système de traitement d'informations, **caractérisé en ce que**
les touches de fonction F1 à F5 sont montées sur la face dos des phalanges proximales des doigts de gant (102) du premier corps de gant (10) et les touches de fonction F6 à F 10 sont montées sur la face paume des phalanges médianes des doigts de gant (122) du second corps de gant (12), respectivement, et
les touches numériques sont montées sur la face dos des phalanges proximales des doigts de gant (102) du premier corps de gant (10) et sur la face paume des phalanges médianes des doigts de gant (122) du second corps de gant (12), respectivement.

2. Clavier sous forme de gant pour un système de traitement d'informations comprenant deux corps de gant (10, 12), chacun formé avec de multiples doigts de gant (102, 122), une pluralité de touches (20) montées sur la face dos de chaque doigt de gant (102) du premier corps de gant (10), une autre pluralité de touches montées sur la face paume de chaque doigt de gant (122) du second corps de gant (12), les touches prévues étant telles qu'appuyer sur une touche saisit un item de fonction, correspondant à ladite touché appuyée, dans le système de traitement d'informations, **caractérisé en ce que**
les touches des symboles alphabétiques sont montées sur la face dos des phalanges médianes des doigts de gant (102) du premier corps de gant (10), et sur la face paume des phalanges proximales des doigts de gant (122) du second corps de gant (12).
